# EUROPÄISCHE PATENTSCHRIFT

(11) **EP 3 103 540 B1**
(45) Veröffentlichungstag und Bekanntmachung des Hinweises auf die Patenterteilung: **12.08.2020**
(21) Anmeldenummer: 16001267.0
(22) Anmeldetag: 04.06.2016
(51) Int. Cl.: B01D 25/00, B01D 25/12, B01D 25/164, B01D 25/28

(54) **FILTERPRESSE**
PRESS FILTER
FILTRE PRESSE

(30) Priorität: 12.06.2015 DE 102015007535
(43) Veröffentlichungstag der Anmeldung: 14.12.2016
(73) Patentinhaber: LENSER Filtration GmbH, 89242 Senden (DE)
(72) Erfinder: Börste, Georg, D 83024 Rosenheim (DE); Zogalla, Thorsten, D 89269 Vöhringen (DE)
(74) Vertreter: Dziewior, Joachim

(56) Entgegenhaltungen:
- EP-A2- 0 265 794
- DE-A1- 3 609 564
- JP-A- S6 279 815

## Beschreibung

Die Erfindung befasst sich mit einer Filterpresse zur Fest-Flüssig-Trennung von Suspensionen, wobei es sich hierbei um diskontinuierlich arbeitende Druckfilter handelt.

Aus DE 38 31 377 C1 ist eine Filterplatte für Filterelemente einer Filterpresse bekannt, bei der es sich um eine Kammerfilterpresse handelt.

Aus DE 41 19 166 A1 ist ein Filterelement für eine Filterpresse bekannt, bei der es sich um eine sogenannte Membran-Filterpresse handelt.

Die EP 0265794 A2 beschreibt ein Verfahren zur Regelung des Filterplatten-Anlagedruckes bei Filterpressen. Die Überwachung des Anlagedrucks zwischen den Filterplatten einer Filterpresse ist aus verschiedenen Gründen von Bedeutung; zum einen muss ein ausreichender Druck vorhanden sein, um die Abdichtung zwischen den Filterplatten zu gewährleisten. Andererseits treten während des Filtrationsprozesses, insbesondere beim Pressvorgang des Filterkuchens, innerhalb der Filterpresse weitere Kräfte auf, die ein Nachregeln des von außen wirkenden Pressdrucks erforderlich macht. Dieses bekannte Verfahren dient also ausschließlich dazu, den senkrecht auf die Filterplatten wirkenden Pressdruck zu ermitteln und bedarfsweise nachzuregeln.

Unabhängig von der Bauart umfasst eine Filterpresse zur Fest-Flüssig-Trennung von Suspensionen mehrere, hintereinander geschaltete, randseitig zusammengespannte plattenförmige Filterelemente mit einer Presswand, einem Plattenrahmen und einem Filtermittel, wie Gewebe oder Membrane, einen Suspensionseinlass und einen Filtratauslass, wobei wenigstens ein berührungslos arbeitender Sensor zur Erfassung der Presswandbelastung wenigstens einem Filterelement zugeordnet ist.

Zum Betreiben derartiger Filterpressen bedarf es einer großen und umfangreichen Erfahrung von Seiten des Bedienungspersonals, um die Prozessparameter der Filterpresse, wie Beschickungsmenge, Stoffdichte, Einlaufdruck und dgl. in geeigneter Weise aufeinander abzustimmen, so das zu hohe Belastungen der Filterelemente vermieden werden.

Die Erfindung zielt daher darauf ab, eine Filterpresse der vorstehend genannten Art derart auszubilden, dass sich auf wirksame Weise sowohl zu hohe Belastungen, die zu Betriebsstörungen führen könnten, vermeiden lassen und insbesondere sich die Prozessparameter der Filterpresse erfahrungsunabhängig möglichst günstig aufeinander abgestimmt und variabel einstellen lassen, sowie die Filterelemente eine längere Lebensdauer haben.

Nach der Erfindung wird hierzu eine Filterpresse zur Fest-Flüssig-Trennung von Suspensionen umfassend mehrere, hintereinander geschaltete, randseitig zusammengespannte plattenförmige Filterelemente mit einer Presswand, einem Plattenrahmen und einem Filtermittel, wie Gewebe oder Membrane, einen Suspensionseinlass und einen Filtratauslass bereitgestellt, wobei wenigstens ein berührungslos arbeitender Sensor zur Erfassung der Presswandbelastung wenigstens einem Filterelement zugeordnet ist, welche sich dadurch auszeichnet, dass der Sensor im Bereich der an den Plattenrahmen angrenzenden Biegezone der Presswand angeordnet ist.

Bei der erfindungsgemäßen Filterpresse mit dem wenigstens einen berührungslos arbeitenden Sensor, welcher wenigstens einem Filterelement zugeordnet ist, lässt sich unabhängig von entsprechenden Erfahrungen der Bedienungspersonen die Presswandbelastung wenigstens eines Filterelements erfassen, wobei sich gezeigt hat, dass im Hinblick auf die Belastungen der Filterelemente die Biegezone der Presswand maßgebend ist, so dass sich dann mit entsprechenden Regelungs- und Auswerteeinrichtungen die maximale Beschickungsmenge regelbar einstellen lässt und sich eine optimierte Filterkuchenbildung realisieren lässt.

So lassen sich die Filterzykluszeiten insgesamt reduzieren und die Filterkapazität der einzelnen Filterelemente der Filterpresse lässt sich verbessern und insgesamt lässt sich die Kapazität der Filterpresse erhöhen.

Vorzugsweise ist der Sensor über eine Auswerteeinrichtung und ggfs. eine Regelungseinrichtung mit einer Überwachungseinrichtung verbunden.

Auf diese Art und Weise lassen sich die so erhaltenen Signale analysieren und auswerten und es lassen sich die Prozessparameter entsprechend variieren.

Vorzugsweise ist der oder sind die Sensor(en) als kontinuierlich arbeitende(r) Sensor(en) ausgebildet. Durch die kontinuierliche Erfassung der Presswandbelastung lässt sich mit Hilfe der zugeordneten Regelungseinrichtung eine maximale Beschickungsmenge einstellen, und die Filterkuchenbildung lässt sich optimieren. Insgesamt gesehen erhält man auf diese Art und Weise eine von Erfahrungen von Bedienungspersonen unabhängig veränderbare Einstellung der Parameter bei einer Filterpresse. Desweiteren ermöglicht die Erfindung aufgrund der Erfassung der Presswandbelastung eine konstruktiv optimierte Auslegung der Filterelemente, wobei sich beispielsweise die Materialdicke der Membrane reduzieren lässt.

Aufgrund einer derartigen konstruktiven Optimierung kann die Anzahl der Filterelemente bei etwa gleicher Baulänge einer Filterpresse größer gewählt werden.

Insbesondere gestattet die Erfindung eine automatisierte Regelung des Filterprozesses mit Hilfe der nach der Erfindung vorgesehenen Sensorik.

Insbesondere sind bei der Filterpresse nach der Erfindung die Beschickungsmenge, die Stoffdichte, der Einlaufdruck und die Filterkuchenbildung über eine Regelungseinrichtung veränderbar, welche mit dem/den kontinuierlich arbeitenden Sensor(en) zur kontinuierlichen Belastungsüberwachung zusammenarbeitet.

Als berührungslos arbeitende Sensoren kommen optische Sensoren mit ggfs. Skalierungen in Betracht. Ferner kann es sich bei dem Sensor um einen induktiven Sensor oder einen kapazitiven Sensor handeln. Vorzugsweise wird der Sensor von einem Dehnungsmessstreifen mit Ohm'scher Widerstandsveränderung eines elektrischen Leiters gebildet.

Vorzugsweise kann die Filterpresse nach der Erfindung als Kammerfilterpresse oder als Membranfilterpresse ausgebildet sein.

Zusammenfassend ist es bei der Erfindung wesentlich, dass die Presswandbelastung bei einer Filterpresse mittels wenigstens einem berührungslos arbeitenden Sensor erfasst wird, welcher wenigstens einem Filterelement zugeordnet ist. Hierdurch lassen sich vorzugsweise kontinuierliche Verformungen und Dehnungen bei der entsprechenden Presswandbelastung des Filterelements erfassen. Insbesondere erlaubt eine solche Auslegung eine automatisierte Regelung des Filterprozesses durch entsprechende regelbare Änderungen der Prozessparameter, wie die Beschickungsmenge, die Stoffdichte, des Einlaufdrucks und die Filterkuchenbildung.

Die Erfindung wird nachfolgend unter Bezugnahme auf die beigefügte Zeichnung anhand von bevorzugten, aber nicht beschränkenden Ausführungsbeispielen näher erläutert.

Darin zeigen:
- Figur 1: eine schematische Prinzipskizze einer Filterpresse üblicher Bauart,
- Figur 2: eine schematische Ansicht einer bevorzugten Ausführungsform einer Filterpresse nach der Erfindung,
- Figur 3: eine Schnittansicht eines einzelnen Filterelements in Form eine2 Kammerfilterelements einer Filterpresse,
- Figur 4: eine schematische Schnittansicht eines einzelnen Filterelements, ausgelegt in Form eines Membranfilterelements,
- Figur 5: eine Schnittansicht eines Membranfilterelements nach Figur 4 vor der Filterkuchenbildung,
- Figur 6: eine schematische Schnittansicht eines einzelnen Membranfilterelements nach Figur 4 mit Filterkuchenaufbau und Veränderung der Lage der elastischen Pressmembrane,
- Figur 7: eine schematische Schnittansicht eines einzelnen Membranfilterelements einer bevorzugten Ausführungsform einer Sensoranordnung nach der Erfindung,
- Figur 8: eine schematische Schnittansicht durch zwei aneinandergrenzende Filterelemente, welche in Form von Kammerfilterelementen nach Figur 3 ausgelegt sind,
- Figur 9: eine der Figur 8 ähnliche Schnittansicht mit einer erfindungsgemäß vorgesehenen Sensoranordnung,
- Figur 10: eine der Figur 8 entsprechenden Schnittansicht von zwei Kammerfilterelement mit einer alternativen Auslegungsform einer Sensoranordnung nach der Erfindung,
- Figur 11: eine der Figur 8 entsprechenden Schnittansicht durch zwei benachbarte oder angrenzende Kammerfilterelemente mit einer weiteren bevorzugten Ausführungsform einer Sensoranordnung nach der Erfindung, und
- Figur 12: eine der Figur 8 ähnliche Schnittansicht durch zwei aneinandergrenzende Kammerfilterelemente mit einer weiteren alternativen Ausführungsform einer Sensoranordnung nach der Erfindung.

In den Figuren der Zeichnung werden gleiche oder ähnliche Teile mit denselben Bezugszeichen versehen.

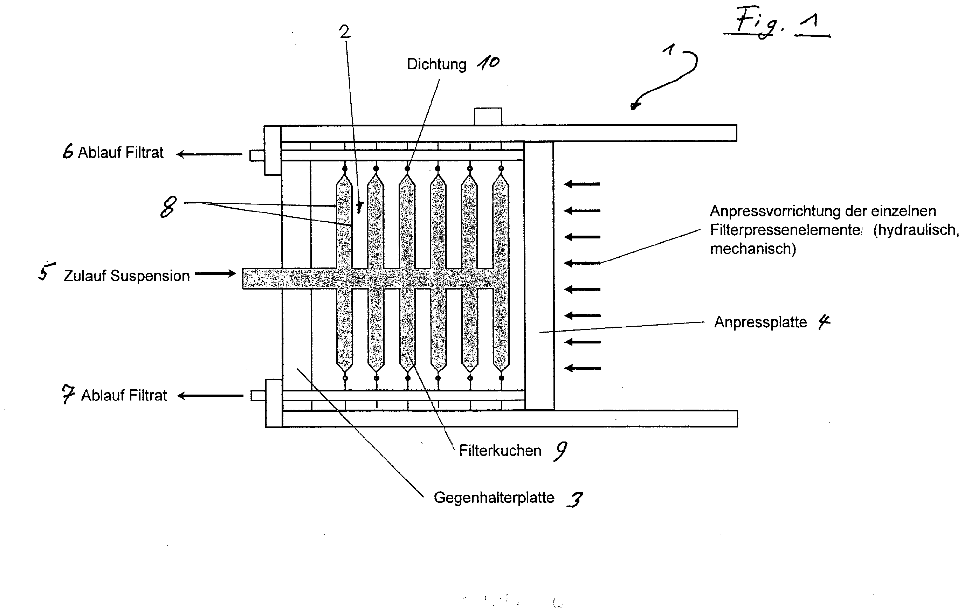

In Figur 1 ist eine schematische Schnittansicht einer insgesamt mit 1 bezeichneten Filterpresse üblicher Bauart dargestellt. Diese Filterpresse 1 umfasst mehrere hintereinandergeschaltete, randseitig zusammengespannte, plattenförmige Filterelemente 2, welche zwischen einer Gegenhalterplatte 3 und einer Anpressplatte 4 angeordnet sind. Ferner umfasst die dargestellte Filterpresse 1 zur Fest-Flüssig-Trennung von Suspensionen einen Suspensions-Zulauf 5, welcher bei der dargestellten Ausführungsform zentrisch und mittig angeordnet ist, und einen Filtratablauf 6 und einen Filtratablauf 7, welche im äußeren Randbereich der Filterelemente 2 angeordnet sind und über nicht näher dargestellte Rinnensysteme, mit den Filterelementen 2 kommunizierend verbunden sind.

Zwischen jeweils angrenzenden und benachbarten Filterelementen 2 bilden sich Kuchenräume 8, in welchen sich schematisch angedeutete Filterkuchen 9 aufbauen können, wenn bei dem Betrieb der Filterpresse 1 die Anpressplatte 4 hydraulisch und/oder mechanisch gegen die Gegenhalterplatte 3 gedrückt wird.

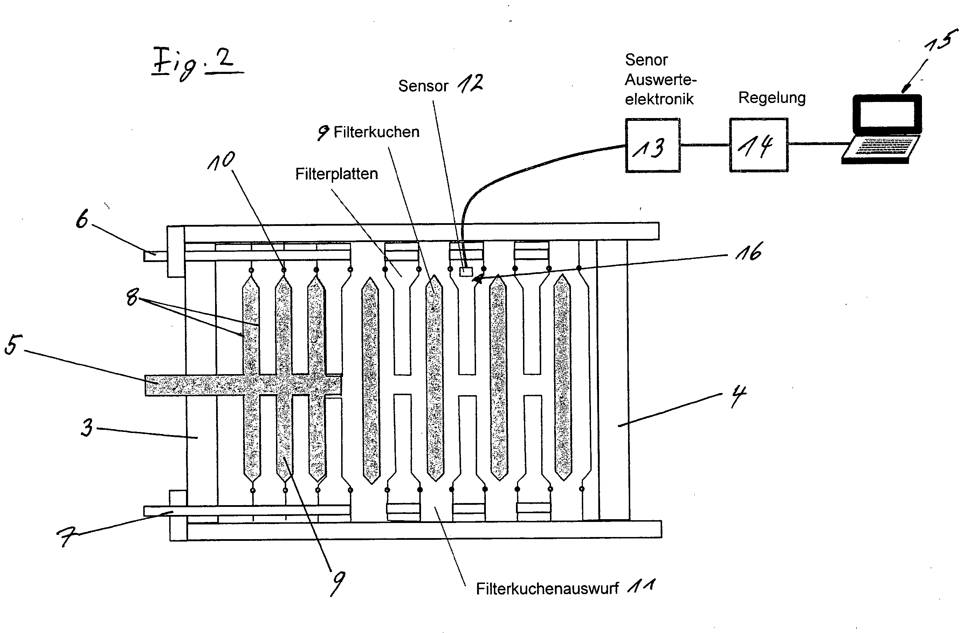

In Figur 2 ist schematisch eine Filterpresse dargestellt, welche dort insgesamt mit 1' bezeichnet ist. Der Grundaufbau der Filterpresse 1' hinsichtlich den Filterelementen und weiteren Einzelheiten entspricht der Auslegung der Filterpresse 1 nach Figur 1. Daher werden diese Einzelheiten nicht nochmals wiederholt.

Wie schematisch auch in Figur 1 angedeutet ist , sind die Filter-Kuchenräume 8 mittels entsprechender Dichtungen 10 abgedichtet. In Figur 2 ist ferner eine Ausführungsvariante dargestellt zur Verdeutlichung der Möglichkeit, den in den Kuchenräumen 8 aufgebauten Filterkuchen 9 entweder manuell oder ggfs. auch automatisch auszuwerfen, wie dies mit dem Pfeil 11 zur Andeutung des Filterkuchenauswurfs dargestellt ist.

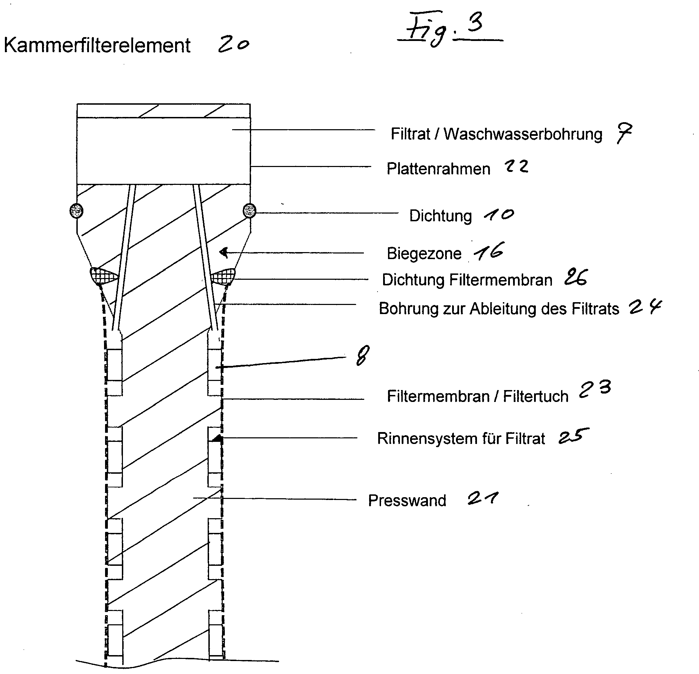

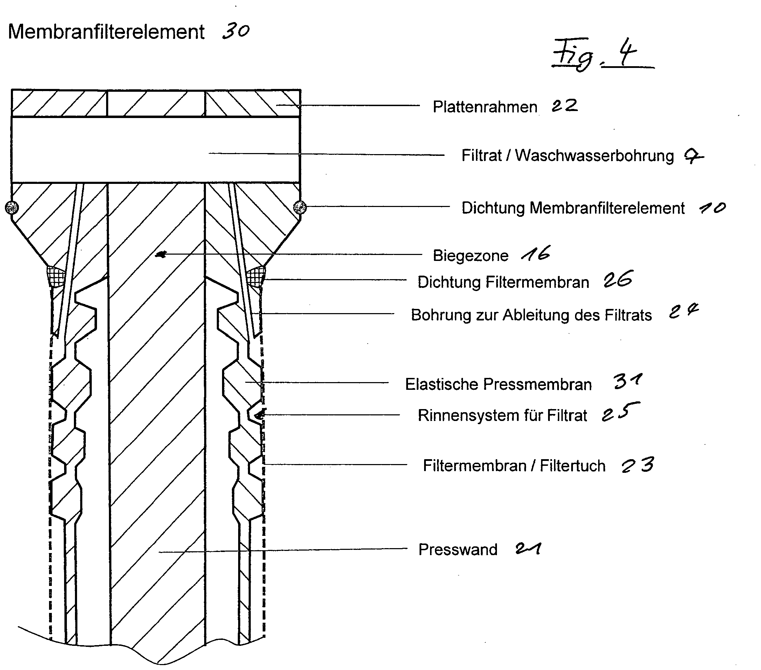

Ferner umfasst die erfindungsgemäße Filterpresse 1' nach Figur 2 einen berührungslos arbeitenden Sensor 12, welcher zur Erfassung der Presswandbelastung dient, der wenigstens einem Filterelement 2 zugeordnet ist. Dieser Sensor 12 ist, wie schematisch angedeutet, mit einer Sensor-Auswerteelektronik 13 verbunden, welche ihrerseits ggfs. über eine Regelungseinrichtung 14 mit einer Überwachungseinrichtung 15 zusammenarbeitet. Bei dieser Ausgestaltungsform einer Filterpresse 1' nach der Erfindung werden mit Hilfe des Sensors 12 die Presswandbelastung des zugeordneten Filterelements 2, sowie die Verformung und/oder Dehnung sowie ggfs. Längenänderungen erfasst. Diese erfassten, Sensorwerte können dann mit Hilfe der Überwachungseinrichtung 15 überwacht werden. Mit Hilfe der ggfs. vorgesehenen Regelungseinrichtung 14 können die Prozessparameter der Filterpresse 1' in entsprechender Weise zur Optimierung der Arbeitsweise geändert und gesteuert werden, wobei es sich insbesondere um die Beschickungsmenge, die Stoffdichte, den Einlaufdruck und die Filterkuchenbildung handeln kann. Vorzugsweise ist der Sensor 12 im Bereich der Biegezone 16 der Presswand 21 der Filterpresse 1' angeordnet. Die näheren Einzelheiten der Filterelemente 2 sind insbesondere in den nachfolgenden Figuren 3 und 4 näher verdeutlicht.

Das in Figur 3 gezeigte Filterelement 2 ist als Kammerfilterelement 20 ausgebildet. Das Kammerfilterelement 20 umfasst eine Presswand 21, einen Plattenrahmen 22 und ein Filtermittel bzw. ein Filtermedium 23, bei dem es sich um ein Gewebe oder eine Membrane handeln, kann, wie dies in Figur 3 schematisch in gebrochenen Linien eingetragen ist. Über Bohrungen 24 kann das Filtrat aus den einzelnen Filterelementen 2, 20 ausgehend von einem nicht näher dargestellten Rinnensystem 25 im Bereich der Erstreckung der Presswand 21 mit dem Filtratablauf 6 bzw. 7 nach Figur 1, oder wie in Figur 3 dargestellt, zu dem Filtratablauf 6 abgeleitet werden. An den Stirnwänden des Filterelements 2, 20 baut sich dann in den dort gebildeten Kuchenräumen 8 ein Filterkuchen 9 auf. Über dem Rinnensystem 25 des Kammerfilterelements 20 nach Figur 3 ist ein Filtermedium, wie z.B. eine Filtermembrane bzw. ein Filtertuch, gespannt. Die Dichtungen 26 zwischen aneinandergrenzenden Filterelementen 2 sind in Figur 3 ebenfalls verdeutlicht. Zusätzlich ist noch eine Dichtung 10 für das Filtermedium 23, wie die Filtermembrane, angedeutet.

Unter Bezugnahme auf Figur 4 wird eine weitere Ausgestaltungform des Filterelements 2 verdeutlicht, welches in Form eines Membranfilterelements 30 ausgelegt ist. Gleiche oder ähnliche Teile wie bei dem Filterelement 2, 20, zuvor erläutert unter Figur 3, sind in Figur 4 mit denselben Bezugszeichen versehen und werden nicht nochmal näher erläutert.

Bei einem Membranfilterelement 30 ist zusätzlich eine flexible bzw. elastische Pressmembran 31 vorgesehen, welche den in den Kuchenräumen 8 sich aufbauenden Filterkuchen 9 so beaufschlagt, dass der gebildete Filterkuchen 9 nach der Filtration mit Hilfe der Pressmembran 31 nachgepresst werden kann.

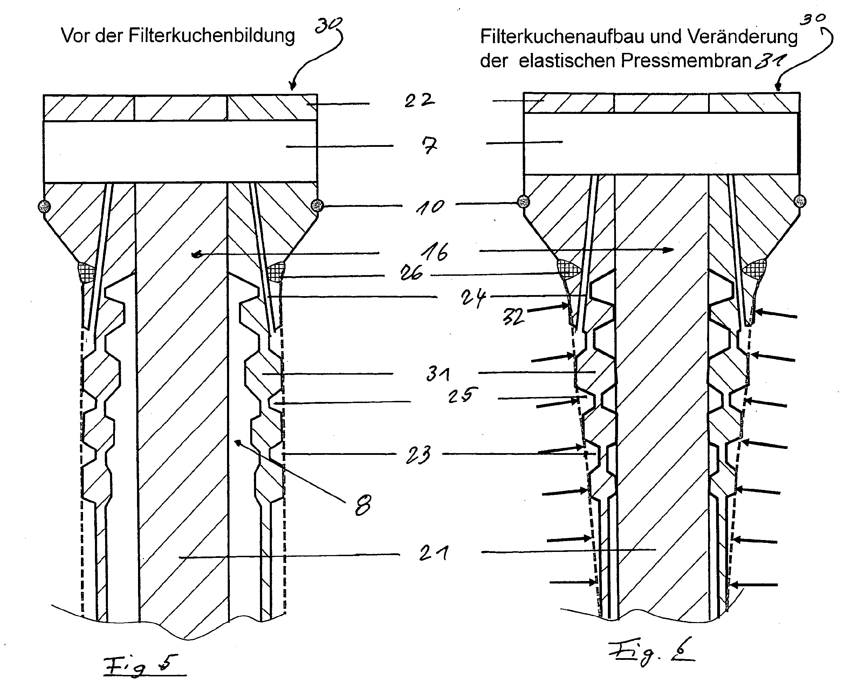

Anhand der Figuren 5 und 6 werden die Zuordnungen der Bauelemente eines Membranfilterelements 30 nach Figur 4 vor der Filterkuchenbildung (Figur 5) und beim Filterkuchenaufbau (Figur 6) verdeutlicht.

Ausgehend von der Position der Pressmembrane 31 in Figur 5 vor der Filterkuchenbildung wird diese entsprechend Figur 6 und den dort angedeuteten Kraftpfeilen in Richtung auf die Presswand 21 elastisch gedrückt, so dass der im Kuchenraum 8 aufgebaute Filterkuchen 9 mittels der elastischen Pressmembrane 31 nochmals nachgepresst wird.

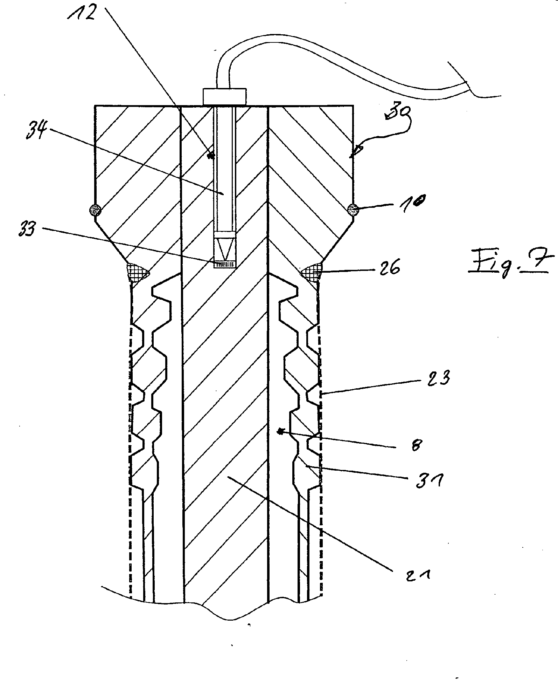

Unter Bezugnahme auf Figur 7 ist schematisch ein Membranfilterelement 30 der vorstehend genannten Art, welche unter Bezugnahme auf die Figuren 4 bis 6 erläutert worden ist, dargestellt, welches ein berührungslos arbeitender Sensor 12 zugeordnet ist. Der berührungslos arbeitende Sensor 12 ist entsprechend Figur 2 über eine Sensor-Auswerteelektronik 13, ggfs. eine Regelungseinrichtung 14 mit der Überwachungseinrichtung 15 verbunden.

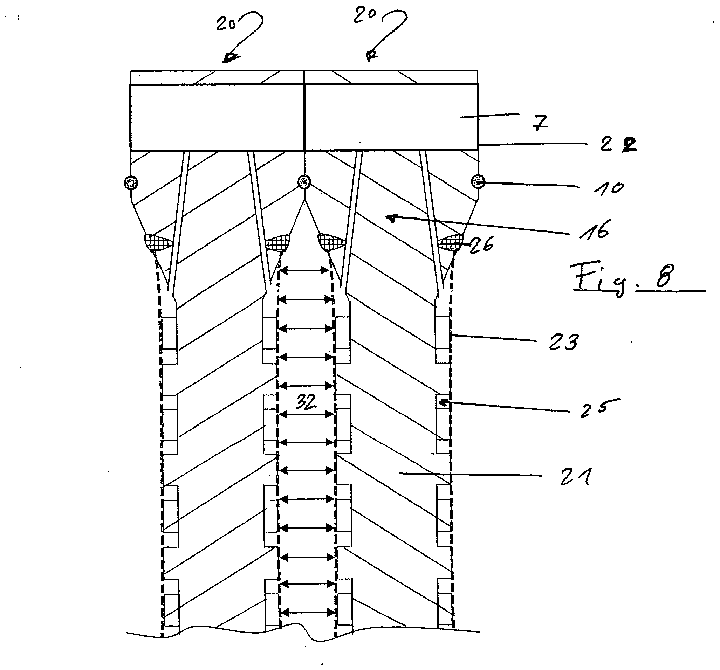

Anhand von Figur 8 werden zwei hintereinander geschaltete und aneinander angrenzende Kammerfilterelemente 20 entsprechend Figur 3 verdeutlicht, wobei mit Pfeilen die Belastung auf die Presswand 21 über die einen Kuchenraum 8 begrenzenden Stirnseiten der beiden Kammerfilterelemente 20 schematisch im Betriebszustand angedeutet ist.

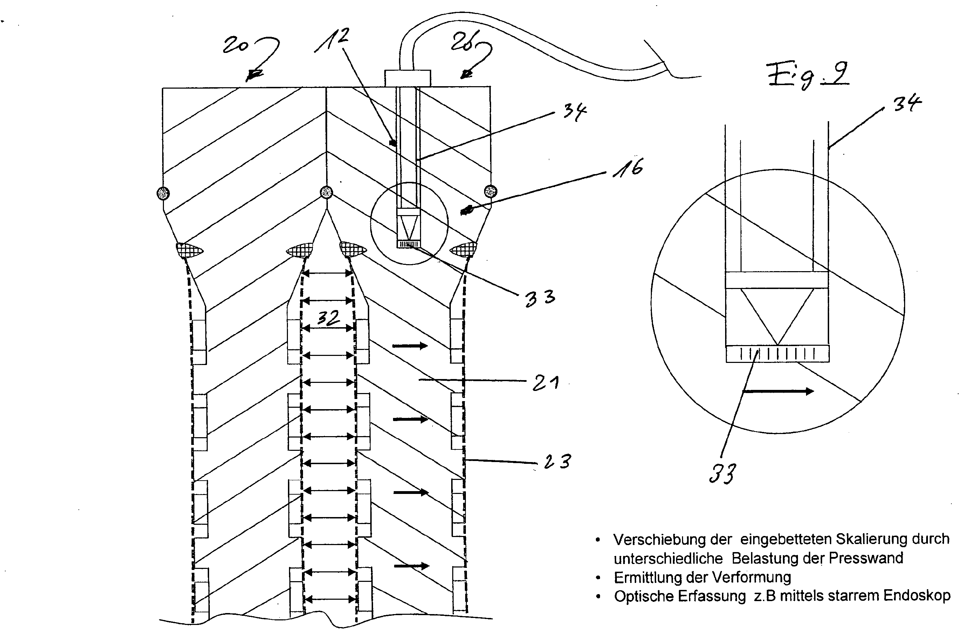

Unter Bezugnahme auf Figur 9 werden zwei Kammerfilterelemente 20' schematisch angedeutet, welche nach der Erfindung mit einem berührungslos arbeitenden Sensor 12 versehen sind, welcher, wie in Figur 2 angedeutet ist, über eine entsprechende Sensor-Auswerteelektronik 13 und ggfs. einer Regelungseinrichtung 14 mit einer Überwachungseinrichtung 15 verbunden ist. Dieser Sensor 12 umfasst, wie in Figur 9 rechts in vergrößerter Ausschnittsdarstellung verdeutlicht, eine Skalierung 33, welche das Ausmaß der Verformung der Presswand 21 in Form einer optischen Erfassung wiedergibt. Figur 9 verdeutlicht somit eine Ausführungsform eines berührungslos arbeitenden Sensors 12 in Form eines optischen Sensors, welcher eine schematisch angedeutete Skalierung 33 hat.

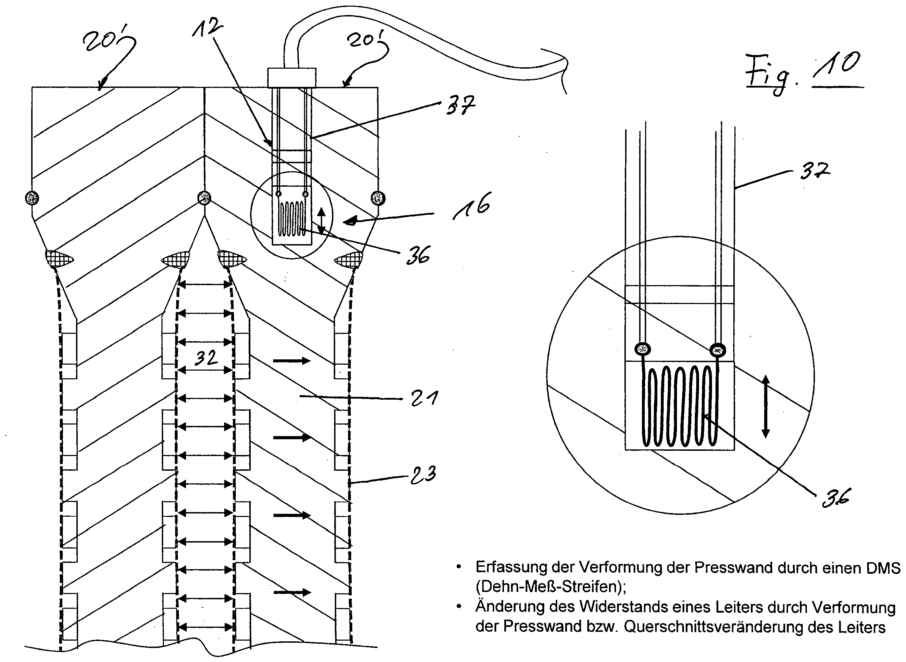

Anhand der Figuren 10 bis 12 werden alternative Ausführungsformen von Sensoren 12 schematisch verdeutlicht. In Figur 10 ist schematisch zur Erfassung der Verformung der Presswand 21 vorzugsweise in der Biegezone 16 der Presswand 21 ein Dehn-Messstreifen (DMS) angeordnet. Durch die Verformung der Presswand 21 ändert sich der Widerstand eines schematisch in Figur 10 angedeuteten Leiters 36. Diese Änderung wird mit Hilfe des Sensors 16 mit dem Dehn-Messstreifen über die Querschnittsveränderung des Leiters des Sensors 37 erfasst. Der Sensor 37 ist dann wie in Figur 2 verdeutlicht, über eine Sensor-Auswerteelektronik 13 und ggfs. eine Regelungseinrichtung 14 mit der Überwachungseinrichtung 15 verbunden.

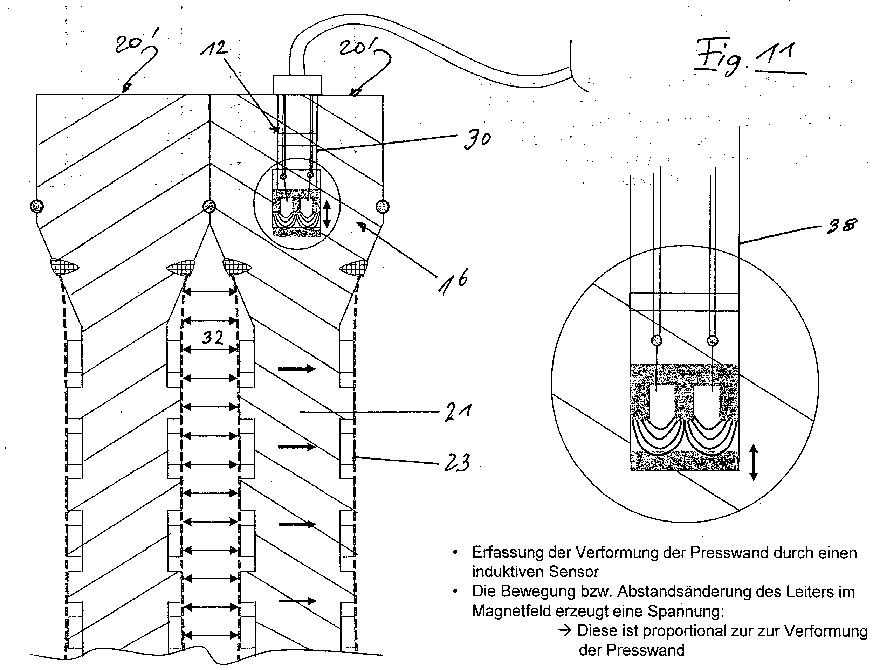

Unter Bezugnahme auf Figur 11 wird eine alternative Ausführungsform eines Sensors 12 verdeutlicht, welcher als ein induktiver Sensor 38 ausgelegt ist. Die Bewegung bzw. die Abstandsänderung des Leiters im Magnetfeld erzeugt eine Spannung, die proportional zur Verformung der Presswand 21 ist. Auch dieser induktive Sensor 38 ist entsprechend Figur 2 mit den nachgeschalteten Einrichtungen verbunden.

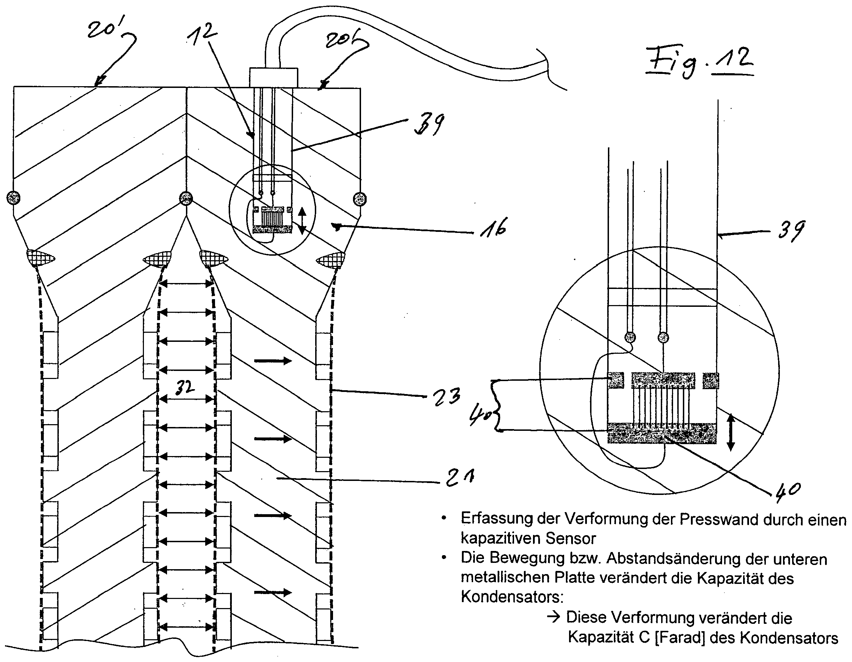

Figur 12 zeigt schließlich eine weitere Ausführungsform eines Sensors 12, welcher in Form eines kapazitiven Sensors 39 ausgelegt ist. Mit Hilfe dieses kapazitiven Sensors 39 wird die Verformung der Presswand 21 erfasst. Wie mit einem Pfeil in der rechts dargestellten Vergrößerung in Figur 12 angedeutet, bewegt sich eine untere metallische Platte 40 des kapazitiven Sensors 39, und es verändert sich hierdurch der Abstand, wodurch sich die Kapazität des schematisch dargestellten Kondensators 41 entsprechend der Verformung der Presswand 21 ändert. Dieser kapazitive Sensor 39 ist, wie vorstehend erläutert, über die Sensor-Auswerteelektronik 13, ggfs. eine Regelungseinrichtung 14 mit einer Überwachungseinrichtung 15 verbunden.

Obgleich die Erfindung voranstehend anhand von bevorzugten Ausführungsformen erläutert worden ist und hierbei pro Filterelement 2 nur ein Sensor 12 vorgesehen ist, wird vorzugsweise natürlich jedem Filterelement 2 im Bereich der Biegezone 16 ein Sensor 12 zugeordnet, oder es werden Sensoren 12 entsprechend der für die Belastung einer Filterpresse 1' kritischen Filterelemente 2 zugeordnet. Die Erfindung ist daher nicht auf die dargestellten bevorzugten Ausführungsbeispiele beschränkt, sondern die Anzahl, die Lage und die Anordnung der Sensoren 12 kann bedarfsabhängig gewählt werden.

### Filterpresse

- 1: Filterpresse insgesamt
- 1': Filterpresse insgesamt in Figur 2
- 2: Filterelement
- 3: Gegenhalterplatte
- 4: Anpressplatte
- 5: Suspensions-Zulauf
- 6: Filtrat-Ablauf (oben)
- 7: Filtrat-Ablauf (unten)
- 8: Kuchenräume
- 9: Filterkuchen
- 10: Dichtungen (Figur 1)
- 11: Filterkuchenauswurf
- 12: Sensor
- 13: Sensor-Auswerteelektronik
- 14: Regelungseinrichtung
- 15: Überwachungseinrichtung
- 16: Biegezone des Filterelements 2

- 20: Kammerfilterelement in Figur 8
- 20': Kammerfilterelement in Figur 9 ff.
- 21: Presswand
- 22: Plattenrahmen
- 23: Filtermedium
- 24: Bohrungen
- 25: Rinnensystem
- 26: Dichtung für Filtermedium 23

- 30: Membranfilterelement insgesamt
- 31: Pressmembran
- 32: Kraftpfeile
- 33: Skalierung
- 34: optischer Sensor
- 36: Leiter (Figur 10)
- 37: Sensor in Form eines Dehn-Messstreifens (DMS)
- 38: induktiver Sensor
- 39: kapazitiver Sensor
- 40: untere metallische Platte
- 41: Kondensator

## Patentansprüche

1. Filterpresse zur Fest-Flüssig-Trennung von Suspensionen umfassend mehrere, hintereinander geschaltete, randseitig zusammengespannte, plattenförmige Filterelemente (2) mit einer Presswand (21), einem Plattenrahmen (22) und einem Filtermittel (23), wie Gewebe oder Membrane, einen Suspensionseinlass (5) und einen Filtratauslass (6, 7), wobei wenigstens ein berührungslos arbeitender Sensor (12) zur Erfassung der Presswandbelastung wenigstens einem Filterelement (2) zugeordnet ist, **dadurch gekennzeichnet, dass** der Sensor (12) im Bereich der an den Plattenrahmen (22) angrenzenden Biegezone (16) der Presswand (21) angeordnet ist.

2. Filterpresse nach Anspruch 1, **dadurch gekennzeichnet, dass** der Sensor (12) über eine Auswerteinrichtung (13) und ggfs. eine Regelungseinrichtung (14) mit einer Überwachungseinrichtung (15) verbunden ist.

3. Filterpresse nach einem der vorangehenden Ansprüche, **dadurch gekennzeichnet, dass** der sensor als kontinuierlich arbeitender Sensor ausgebildet ist.

4. Filterpresse nach einem der Ansprüche 2 oder 3, **dadurch gekennzeichnet, dass** mittels des/der kontinuierlich arbeitenden Sensors(en) (12) Prozessparameter der Filterpresse (1'), insbesondere die Beschickungsmenge, Stoffdichte, Einlaufdruck und Filterkuchenbildung über die Regelungseinrichtung veränderbar sind.

5. Filterpresse nach einem der vorangehenden Ansprüche, **dadurch gekennzeichnet, dass** der Sensor (12) ein optischer Sensor (34) ggfs. mit Skalierung (33) ist.

6. Filterpresse nach einem der Ansprüche 1 bis 4, **dadurch gekennzeichnet, dass** der Sensor (12) ein induktiver Sensor (38) ist.

7. Filterpresse nach einem der Ansprüche 1 bis 4, **dadurch gekennzeichnet, dass** der Sensor (12) ein kapazitiver Sensor (39) ist.

8. Filterpresse nach einem der Ansprüche 1 bis 4, **dadurch gekennzeichnet, dass** der Sensor (12) von einem Dehnungsmessstreifen (37) mit Ohm'scher Widerstandsveränderung eines elektrischen Leiters (36) gebildet wird.

9. Filterpresse nach einem der vorangehenden Ansprüche, **dadurch gekennzeichnet, dass** die Filterpresse (1) als Kammerfilterpresse ausgebildet ist.

10. Filterpresse nach einem der Ansprüche 1 bis 8, **dadurch gekennzeichnet, dass** die Filterpresse (1) als Membranfilterpresse ausgebildet ist.

## Claims

1. A filter press for solid-liquid separation of suspensions including a plurality of successively connected plate-shaped filter elements (2) clamped together at the edges, and having a press wall (21), a plate frame (22) and a filter means (23) like fabric or membrane, a suspension inlet (5) and a filtrate outlet (6, 7), wherein at least one contact-lessly operating sensor (12) for detecting the press wall loading is associated with at least one filter element (2), **characterised in that** the sensor (12) is arranged in the region of the bending zone (16) of the press wall (21), that adjoins the plate frame (22).

2. A filter press according to claim 1 **characterised in that** the sensor (12) is connected to a monitoring device (15) by way of an evaluation device (13) and optionally a control device (14).

3. A filter press according to one of the preceding claims **characterised in that** the sensor (12) is in the form of a continuously operating sensor.

4. A filter press according to one of claims 2 and 3 **characterised in that** process parameters of the filter press (1'), in particular charging amount, consistency, inlet pressure and filter cake formation are variable by way of the control device by means of the continuously operating sensor or sensors (12).

5. A filter press according to one of the preceding claims **characterised in that** the sensor (12) is an optical sensor (34), optionally with scaling (33).

6. A filter press according to one of claims 1 to 4 **characterised in that** the sensor (12) is an inductive sensor (38).

7. A filter press according to one of claims 1 to 4 **characterised in that** the sensor (12) is a capacitive sensor (39).

8. A filter press according to one of claims 1 to 4 **characterised in that** the sensor (12) is formed by a strain gauge (37) with an ohmic resistance change of an electrical conductor (36).

9. A filter press according to one of the preceding claims **characterised in that** the filter press (1) is in the form of a chamber filter press.

10. A filter press according to one of claims 1 to 8 **characterised in that** the filter press (1) is in the form of a membrane filter press.

## Revendications

1. Filtre-presse pour la séparation liquide/solide de suspensions, comprenant plusieurs éléments de filtre (2) en forme de plaque, tendus ensemble du côté des bords et montés les uns derrière les autres, avec une paroi de presse (21), un cadre de plaque (22) et un moyen filtrant (23), tel qu'un tissu ou une membrane, une entrée de suspensions (5) et une sortie de filtrat (6, 7), dans lequel au moins un capteur (12) fonctionnant sans contact pour enregistrer la charge de la paroi de presse est associé à au moins un élément de filtre (2), **caractérisé en ce que** le capteur (12) est disposé au niveau de la zone courbée (16) de la paroi de presse (2) qui est adjacente au cadre de plaque (22).

2. Filtre-presse selon la revendication 1, **caractérisé en ce que** le capteur (12) est relié à un dispositif de surveillance (15) par le biais d'un moyen d'évaluation (13) et éventuellement d'un moyen de régulation (14).

3. Filtre-presse selon une des revendications précédentes, **caractérisé en ce que** le capteur (12) est réalisé sous la forme d'un capteur fonctionnant en continu.

4. Filtre-presse selon une des revendications 2 ou 3, **caractérisé en ce que**, à l'aide du/des capteur(s) (12) fonctionnant en continu, des paramètres de processus du filtre-presse (1 '), en particulier le chargement, la consistance, la pression d'entrée et la formation du gâteau de filtre peuvent être modifiés par le biais du moyen de régulation.

5. Filtre-presse selon une des revendications précédentes, **caractérisé en ce que** le capteur (12) est un capteur optique (34) éventuellement avec une mise à l'échelle (33).

6. Filtre-presse selon une des revendications 1 à 4, **caractérisé en ce que** le capteur (12) est un capteur inductif (38).

7. Filtre-presse selon une des revendications 1 à 4, **caractérisé en ce que** le capteur (12) est un capteur capacitif (39).

8. Filtre-presse selon une des revendications 1 à 4, **caractérisé en ce que** le capteur (12) est formé d'une jauge de déformation (37) avec un changement de résistance ohmique d'un conducteur électrique (36).

9. Filtre-presse selon une des revendications précédentes, **caractérisé en ce que** le filtre-presse (1) est réalisé sous la forme d'un filtre-presse à chambres.

10. Filtre-presse selon une des revendications 1 à 8, **caractérisé en ce que** le filtre-presse (1) est réalisé sous la forme d'un filtre-presse à membranes.
